# NEUE EUROPÄISCHE PATENTSCHRIFT

(11) **EP 2 570 318 B2**
(45) Veröffentlichungstag und Bekanntmachung des Hinweises auf die Entscheidung über den Einspruch: **27.03.2024**
(45) Hinweis auf die Patenterteilung: 02.05.2018
(21) Anmeldenummer: 12184376.7
(22) Anmeldetag: 14.09.2012
(51) Int. Cl.: B60T 13/66, B60T 13/68, B60T 17/00, B60T 8/17

(54) **Druckluftaufbereitungseinheit**
Compressed air preparation unit
Unité de compression d'air

(30) Priorität: 16.09.2011 DE 102011053707
(43) Veröffentlichungstag der Anmeldung: 20.03.2013
(73) Patentinhaber: Haldex Brake Products Aktiebolag, 261 24 Landskrona (SE)
(72) Erfinder: Heer, Siegfried, 69168 Wiesloch (DE)
(74) Vertreter: Müller Schupfner & Partner Patent- und Rechtsanwaltspartnerschaft mbB

(56) Entgegenhaltungen:
- EP-A1- 2 165 901
- EP-A1- 2 305 524
- EP-A2- 2 108 557
- DE-A1-102004 051 309
- DE-A1-102006 036 017
- DE-A1-102006 048 071
- DE-B3-102009 059 816

## Beschreibung

### TECHNISCHES GEBIET DER ERFINDUNG

Die Erfindung betrifft eine Druckluftaufbereitungseinheit für eine Druckluftanlage eines Nutzfahrzeugs. Möglich ist, dass das Nutzfahrzeug mit einer hydraulischen Bremsanlage ausgestattet ist, bei welcher ein vom Fahrer über ein Pedal, einen Schalter, einen Hebel o. ä. vorgegebenes Parkbremssignal und/oder Fußbremssignal über ein Hydraulikmedium übertragen wird an hydraulische Betriebsbremszylinder oder Parkbremszylinder. Einsatz findet die Erfindung insbesondere für Schlepper oder landwirtschaftliche Fahrzeuge, SUVs, Krankentransportfahrzeuge u. ä.

### STAND DER TECHNIK

Bekannte Druckluftaufbereitungseinrichtungen für Nutzfahrzeuge verfügen über einen mit einer Druckluftquelle, insbesondere einem Kompressor verbundenen eingangsseitigen Versorgungsanschluss sowie ausgangsseitige Anschlüsse für Verbraucherkreise, bei welchen es sich um Betriebsbremskreise, Feststellbremskreise, einen Anhängerbremskreis, einen Luftfederkreis und Nebenverbraucherkreise handeln kann, welche mit oder ohne Behälter ausgestattet sind. Die Druckluftaufbereitungseinheit dient hierbei alternativ oder kumulativ insbesondere den folgenden Zwecken:
- Durch Integration eines Lufttrockners, unter Umständen mit ergänzenden Filtereinrichtungen, erfolgt eine Reinigung und Entfeuchtung der vom Kompressor bereitgestellten Druckluft.
- In die Druckluftaufbereitungseinheit ist ein Druckregler integriert, welcher die Bereitstellung und die Druckverhältnisse in einer Zentralleitung, welche zu den einzelnen Verbraucherkreisen verzweigt, regelt. Die Druckregelung kann in einer Bereitstellung eines Steuersignals für den Kompressor zum An- und Abschalten oder Verändern der Drehzahl des Kompressors bestehen. Möglich ist auch, dass der Kompressor permanent Druckluft fördert, aber ein Druckregler die Bereitstellung von Druckluft zu der Zentralleitung unterbricht, indem dieser den eingangsseitigen Versorgungsanschluss mit einer Entlüftung verbindet, sodass der Kompressor in die Umgebung fördert.
- Integriert in die Druckluftaufbereitungseinheit ist u. U. eine Regenerationseinrichtung, mittels welcher vom Lufttrockner gereinigte Druckluft, beispielsweise aus einem separaten Regenerationsluftbehälter oder einem Behälter eines Verbraucherkreises, in umgekehrter Richtung durch den Lufttrockner geführt wird. Diese Regenerationsluft kann dem Trocknungsmittel des Lufttrockners Feuchtigkeit entziehen mit anschließender Abführung der feuchten Regenerationsluft über einen Entlüftungsanschluss. Vielfältige Verfahren zur Steuerung der Regenerationseinrichtung zwischen einer Lastphase, in welcher die Druckluft des Kompressors der Zentralleitung und damit den Verbraucherkreisen zugeführt wird, und einer Regenerationsphase sind aus dem Stand der Technik bekannt.
- In die Druckluftaufbereitungseinheit sind den jeweiligen Verbraucherkreisen zugeordnete Kreisschutzventile integriert, welche beispielsweise als Überströmventile mit oder ohne elektrische oder elektropneumatische Ansteuerungsmöglichkeit ausgebildet sind oder anderweitig als elektrisch oder elektropneumatisch von einer Druckluftaufbereitungseinheit ansteuerbare Ventile ausgebildet sein können. Die Kreisschutzventile dienen bspw. einer Steuerung einer Befüllung der Verbraucherkreise, der Begrenzung der Drücke in den Verbraucherkreisen, der Gewährleistung einer Freigabe einer Befüllung eines Feststellbremskreises erst mit hinreichender Befüllung der Betriebsbremskreise, der Ermöglichung einer Querspeisung eines Verbraucherkreises aus einem anderen Verbraucherkreis, der Bildung von Gruppen für die Befüllung der Verbraucherkreise, der Absperrung eines Verbraucherkreises im Fall eines erkannten Defektes u. ä.

Weitere Details zu den vielfältigen grundsätzlichen Ausgestaltungsmöglichkeiten derartiger Druckluftaufbereitungseinheiten sind dem folgenden Stand der Technik zu Druckluftaufbereitungseinheiten zu entnehmen:
DE 195 15 895 A1 beschreibt eine Druckluftaufbereitungseinheit, in welcher die Kreisschutzventile als Überströmventile, elektropneumatisch vorgesteuerte Überströmventile oder als rein elektromagnetisch angesteuerte Sperrventile ausgebildet sind, wobei die Druckschrift unterschiedliche möglich Ansteuerungsstrategien für die Kreisschutzventile offenbart.

DE 196 49 498 C1 offenbart eine Druckluftaufbereitungseinheit, bei welcher den Verbraucherkreisen Kreisschutzventile in Ausgestaltung als Überströmventile oder Rückschlagventile vorgeordnet sind, welche jeweils elektropneumatisch von einer Steuereinheit vorgesteuert sind. Die Druckluftaufbereitungseinheit verfügt über einen elektropneumatischen Druckregler sowie einen mechanisch-pneumatischen Druckregler, dessen Abschaltdruck deutlicher höher ist als der Abschaltdruck des elektropneumatischen Druckregler, vgl. auch DE 198 21 420 C1**.**

In der Druckluftaufbereitungseinheit gemäß DE 102 20 790 C1 ist ein Magnetventil multifunktional ausgebildet, indem dieses einerseits zum Ansteuern eines Überströmventils und andererseits zum Steuern einer Regenerationsphase dient.

DE 103 14 643 B4 offenbart die Ausgestaltung der Druckluftaufbereitungseinheit mit mehreren einzelnen Modulen, welche in ein gemeinsames Gehäuse integriert, aneinander angeflanscht oder über Leitungen miteinander verbunden sein können.

DE 10 2004 026 624 B3 beschäftigt sich mit der adaptiven Steuerung der Last- und Regenerationsphasen mit einer Erfassung der in einer Lastlaufphase geförderten Druckluftmenge und Ermittlung einer geeigneten Regenerationsluftmenge, einer Korrektur der genannten Druckluftmengen auf Grundlage erfasster Druckverläufe und Druckdifferenzen im Neuzustand und in zeitlichen Abständen über die Lebensdauer u. ä.

DE 103 38 162 B3 betrifft die Ansteuerung der Kreisschutzventile unter der Bildung von einzelnen Steuerungsgruppen der Verbraucherkreise.

Gemäß DE 103 33 610 B4 ist mindestens ein Ventil zur Steuerung der Luftfederanlage, also zur Steuerung eines Be- und Entlüftens der Luftfederbälge zur Niveauänderung, in die Druckluftaufbereitungseinheit integriert, wobei auch ein Liftachsventil in die Druckluftaufbereitungseinheit integriert sein kann.

DE 103 14 642 B3 schlägt vor, dass in die Druckluftaufbereitungseinheit mindestens ein Ventil integriert ist, über welche entsprechend einer elektronischen Steuerung ein mit einer Federspeicher-Feststellbremse verbundener Anschluss der Druckluftaufbereitungseinheit belüftet, entlüftet oder abgesperrt werden kann. In diesem Fall verfügt die Steuereinheit der Druckluftaufbereitungseinheit über einen elektrischen Eingangsanschluss, über welchen ein willkürlich vom Fahrer, beispielsweise mittels eines elektrischen Schalters, erzeugtes elektrisches Park- oder Handbremssignal der Steuereinheit zugeführt wird. Neben der Umsetzung des vom Fahrer vorgegebenen willkürlichen Signals eröffnet diese Ausgestaltung Möglichkeiten für einen gezielten automatisierten Einsatz der Federspeicher-Feststellbremse, beispielsweise in Notsituationen, als Anfahrhilfe am Berg u. ä.

Ein weiteres Beispiel des Standes der Technik ist in DE 10 2006 048 071 A1 offenbart.

Während die vorgenannten Druckluftaufbereitungseinheiten in Nutzfahrzeugen eingesetzt sind, welche über eine pneumatische Betriebsbremsanlage und/oder pneumatische Federspeicher-Bremsanlage verfügen, gibt es auch Nutzfahrzeuge, welche über eine hydraulische Bremsanlage verfügen, während hier eine Druckluftanlage beispielsweise für den Betrieb des Luftfederkreises und etwaigen Nebenverbraucherkreisen genutzt wird. In diesen Fällen verfügt die Druckluftaufbereitungseinheit nicht über Anschlüsse und vorgeordnete Kreisschutzventile für pneumatische Betriebsbremskreise, während ansonsten die Druckluftaufbereitungseinheit im Wesentlichen unverändert zu den Druckluftaufbereitungseinheiten gemäß dem vorgenannten Stand der Technik ausgebildet sein kann. Wird ein mit einer derartigen Druckluftaufbereitungseinheit und einer hydraulischen Betriebsbremsanlage ausgestattetes Nutzfahrzeug mit einem Anhänger gekoppelt, welcher über eine pneumatische Anhängerbremsanlage verfügt, muss über die Druckluftaufbereitungseinheit ein Versorgungsdruck für die Anhängerbremsanlage bereitgestellt werden. Zusätzlich zu dem Versorgungsdruck, welcher üblicherweise über einen Kupplungskopf Vorrat an den Anhänger übertragen wird, muss dem Anhänger ein Bremssteuerdruck zur Verfügung gestellt werden, welcher mit dem hydraulischen Bremsdruck der hydraulischen Betriebsbremsanlage des Zugfahrzeugs korreliert. Hierzu finden in dem Zugfahrzeug üblicherweise Anhängersteuerventile Einsatz, welche aus dem hydraulischen Bremsdruck des Zugfahrzeugs einen pneumatischen Bremssteuerdruck für den Anhänger erzeugen. Dies kann über ein Relaisventil oder einen Wiegekolben erfolgen, welcher bzw. welches je nach einwirkendem steuernden hydraulischen Bremsdruck einen pneumatischen Versorgungsdruck umwandelt in einen pneumatischen Bremssteuerdruck.

Aus der Druckschrift DE 10 2009 045 191 A1 ist ein Anhängersteuerventil bekannt, bei welchen der ausgesteuerte Bremssteuerdruck nicht nur über den hydraulischen Bremsdruck beeinflusst werden kann, sondern auch entsprechend einem elektrischen Steuersignal einer Steuereinheit, über welches beispielsweise ein pneumatischer Steuerdruck ausgesteuert wird, welcher ebenfalls auf das Anhängersteuerventil einwirkt.

Alternativ zu der auch elektrischen oder elektropneumatischen Ansteuerung des Anhängersteuerventils selbst schlägt DE 10 2008 048 208 B4 die redundante Erzeugung eines Bremssteuerdrucks über einen hydraulisch-pneumatischen Beaufschlagungspfad sowie einen elektropneumatischen Beaufschlagungspfad vor. Die letztgenannten Anhängersteuerventile, unter welche auch eine Ventilbaugruppe mit dem Anhängersteuerventil und den genannten parallelen Beaufschlagungspfaden subsumiert wird, ermöglichen verbesserte Steuerungsmöglichkeiten für den Bremssteuerdruck des Anhängers, beispielsweise hinsichtlich des Ansprechverhaltens und einer "Voreilung" des Anhängersteuerventils, eine erhöhte Betriebssicherheit durch Schaffung einer redundanten nicht elektrischen Rückfallebene u. ä.

Ein elektronisch geregeltes redundantes Bremssystem, in welchem ein Anhängersteuermodul Einsatz findet, ist aus DE 10 2008 009 043 B3 bekannt.

### AUFGABE DER ERFINDUNG

Der Erfindung liegt die Aufgabe zugrunde, eine verbesserte und multifunktionale Druckluftaufbereitungseinheit für eine Druckluftanlage eines Nutzfahrzeugs vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird erstmals vorgeschlagen, dass eine Druckluftaufbereitungseinheit für eine Druckluftanlage eines Nutzfahrzeugs mit einem Anhängersteuerventil ausgestattet ist. Hierbei kann das Anhängersteuerventil in die Druckluftaufbereitungseinheit, beispielsweise ein gemeinsames Gehäuse, integriert sein, während ebenfalls möglich ist, dass das Anhängersteuerventil ein Modul der Druckluftaufbereitungseinheit bildet, welches an ein anderes Modul angeflanscht ist. Das Anhängersteuerventil der Druckluftaufbereitungseinheit kann ausschließlich der Bereitstellung des Bremssteuerdrucks für den Anhänger dienen, während aber auch durchaus möglich ist, dass das Anhängersteuerventil auch für die Bereitstellung eines Versorgungsdrucks für den Anhängerbremskreis zuständig ist. Demgemäß kann die Druckluftaufbereitungseinheit mindestens einen Anschluss besitzen, der mit einem Kupplungskopf Bremse und/oder einem Kupplungskopf Vorrat verbunden ist. Möglich ist, dass das Anhängersteuerventil einen Bremssteuerdruck erzeugt, welcher abhängig ist von einem Betriebsbremswunsch oder Parkbremswunsch des Fahrers. Um lediglich ein Beispiel zu nennen, kann ein derartiger Wunsch des Fahrers einer Steuereinheit der Druckluftaufbereitungseinheit als elektrisches Signal zugeführt werden, welches beispielsweise einem Pedalsensor, einem Parkbremsschalter oder -hebel oder einer elektromechanischen Bremseinrichtung, hier einer entsprechenden Steuereinheit, entstammen kann. Möglich ist die Übertragung eines derartigen elektrischen Signals über eine hierfür bestimmte gesonderte Leitung oder über einen Bussystem. Das Anhängersteuerventil wandelt den Wunsch des Fahrers durch beliebige, an sich aus dem Stand der Technik bekannte Maßnahmen um in ein geeignetes pneumatisches Bremssteuersignal für den Anhänger.

Durch die erfindungsgemäße Integration des Anhängersteuerventils in die Druckluftaufbereitungseinheit wird eine kompakte und nicht auf mehrere Stellen des Nutzfahrzeugs verzweigte Einheit geschaffen, welche werkseitig bereits montiert sein kann. Die derartige Druckluftaufbereitungseinheit ist multifunktional mit einer weiteren Funktion gegenüber den Druckluftaufbereitungseinheiten gemäß dem Stand der Technik ausgebildet.

Vorzugsweise findet die Erfindung Einsatz in einem Nutzfahrzeug, welches mit einer hydraulischen Bremsanlage ausgestattet ist. In diesem Fall dient das Anhängersteuerventil einer Erzeugung eines pneumatischen Bremssteuerdrucks für einen Anhänger in Abhängigkeit eins hydraulischen Bremsdrucks. Hierzu kann dem Anhängersteuerventil unmittelbar der hydraulische Bremsdruck zugeführt werden, beispielsweise über eine geeignete Zweigleitung. Ebenfalls möglich ist, dass der hydraulische Bremsdruck in ein anderes Signal umgewandelt wird, welches dann von dem Anhängersteuerventil oder einer das Anhängersteuerventil beaufschlagenden Steuereinheit verarbeitet wird. Beispielsweise kann es sich um ein elektrisches Bremssignal handeln, welches mit dem hydraulischen Bremsdruck korreliert. Es versteht sich, dass im sinne der vorliegenden Erfindung unter der Erzeugung des pneumatischen Bremssteuerdrucks *in Abhängigkeit eines hydraulischen Bremsdrucks* auch die Ansteuerung des Anhängersteuerventils in Abhängigkeit eines elektrischen Betätigungssignals eines hydraulischen Bremspedals oder eines hydraulischen Parkbremsorgans, über welchen oder welches der hydraulische Bremsdruck erzeugt wird, verstanden wird.

Erfindungsgemäß erfüllt die Druckluftaufbereitungseinheit eine weitere Funktion, indem in diese eine Notbremseinrichtung für die Betätigung der Anhängerbremsanlage in einer Notbremssituation integriert ist. Um hier lediglich ein Beispiel zu nennen, kann das Anhängersteuerventil bei einer beispielsweise durch eine Steuereinheit erkannten Notbremssituation eine Beeinflussung des ausgesteuerten pneumatischen Bremssteuerdrucks für einen Anhänger erzeugen, insbesondere eine Bremsbetätigung der Anhängerbremsanlage verursachen. In besonderer Ausgestaltung der Erfindung wird aber der Tatsache Rechnung getragen, dass üblicherweise Anhängerbremsanlagen mit einem Anhängerbremsventil mit integrierter Notbremsfunktion ausgestattet sind. Diese Notbremsfunktion des Anhängerbremsventils führt zu einer automatischen Herbeiführung einer Notbremsung des Anhängers, wenn der Kupplungskopf Vorrat abreißt. Hingegen kann die Notbremsfunktion des Anhängerbremsventils nicht erkennen, wenn zwar die Druckluftversorgung über den Kupplungskopf Vorrat ordnungsgemäß erfolgt, aber ein Defekt in der Bremssteuerleitung auftritt, also beispielsweise der Kupplungskopf Bremse abreißt. Die Erfindung schlägt hier vor, dass, beispielsweise über einen Sensor, welcher den Druck an dem mit dem Kupplungskopf Bremse verbundenen Anschluss erfasst, geprüft wird, ob der tatsächliche Bremssteuerdruck dem gewünschten oder auszusteuernden Bremssteuerdruck entspricht. Ist dies z. B. beim Abriss der Bremsleitung zum oder am Anhänger nicht der Fall, kann erfindungsgemäß eine Notbremsung (auch) des Anhängers herbeigeführt werden. Hierzu wird dann aber nicht der Bremssteuerdruck verwendet. Vielmehr wird über die Notbremseinrichtung der Druck an einem Anschluss für einen Kupplungskopf Vorrat gezielt verringert. Diese Verringerung des Versorgungsdrucks des Anhängerbremsventils des Anhängers hat zur Folge, dass die Notbremsfunktion des Anhängerbremsventils ausgenutzt wird.

Die Notbremseinrichtung kann unmittelbarer Bestandteil des Anhängersteuerventils sein. In einer weiteren Ausgestaltung der Erfindung ist dem Versorgungsanschluss des Anhängersteuerventils in der Druckluftaufbereitungseinheit ein Notbremsventil vorgeordnet, welches in der erläuterten Situation die Verringerung des Drucks an dem Versorgungsanschluss des Anhängersteuerventils und damit auch an dem Anschluss für den Kupplungskopf Vorrat herbeiführt.

Für die Übermittlung des Bremswunsches des Fahrers umfasst die Erfindung mehrere Möglichkeiten. Gemäß einer Ausgestaltung der Erfindung besitzt die Druckluftaufbereitungseinheit einen elektrischen Anschluss, über welchen der Druckluftaufbereitungseinheit ein elektrisches Signal zuführbar ist, welches mit einem hydraulischen Bremsdruck korreliert. Möglich ist auch, dass die Druckluftaufbereitungseinheit mindestens einen hydraulischen Anschluss für eine hydraulische Bremsleitung besitzt.

Für den Fall, dass der Druckluftaufbereitungseinheit der hydraulische Druck über den mindestens einen hydraulischen Anschluss zugeführt wird, kann dieses Drucksignal auf beliebige Weise weiterverarbeitet und genutzt werden. In einer bevorzugten Ausgestaltung ist der hydraulische Anschluss unmittelbar mit dem hydraulischen Steueranschluss des Anhängersteuerventils verbunden, wobei auch weitere hydraulische Ventilelemente in die Verbindungsleitung mit dem hydraulischen Steueranschluss integriert sein können. Auf diese Weise kann unmittelbar der hydraulische Druck an dem hydraulischen Anschluss genutzt werden für die Beeinflussung einer Betriebsstellung des Anhängersteuerventils und die Aussteuerung des pneumatischen Bremssteuerdrucks für den Anhänger. Durchaus möglich ist, dass ergänzende Steuerungsmöglichkeiten, beispielsweise auch eine redundante elektrische Steuerung, eine elektropneumatische Vorsteuerung u. ä. Einsatz finden.

In weiterer Ausgestaltung der Erfindung ist in der Druckluftaufbereitungseinheit ein Drucksensor vorhanden. Der Drucksensor erfasst den von dem Anhängersteuerventil ausgesteuerten pneumatischen Bremssteuerdruck für den Anhänger. Das Drucksignal des Drucksensors wird einer Steuereinheit zugeführt. Die Steuereinheit ist mit Steuerlogik ausgestattet, die zusätzlich zu dem an dem hydraulischen Steueranschluss anliegenden Druck und/oder zusätzlich zu einem elektrischen Signal, welches mit einem hydraulischen Bremsdruck korreliert, den Bremssteuerdruck beeinflusst. Auf diese Weise kann auch eine Regelung des Bremsteuerdrucks erfolgen. Andererseits kann über die Rückführung des Bremssteuerdrucks zu der Steuereinheit auch auf einen Betriebszustand des Anhängers geschlossen werden und insbesondere eine defekte Bremssteuerleitung erkannt werden.

Zur Erweiterung der Möglichkeiten der Steuerung oder Regelung und/oder zur Erhöhung der Betriebssicherheit kann das Anhängersteuerventil redundant einerseits hydraulisch und andererseits elektrisch, pneumatisch und/oder elektropneumatisch angesteuert werden, wobei vorzugsweise die elektrische, pneumatische und/oder elektropneumatische Ansteuerung eine höhere Priorität besitzt, während die hydraulische Ansteuerung eine Rückfallebene im Defektfall bildet.

Zur Priorisierung einer Ansteuerungsmöglichkeit der beiden redundanten vorgenannten Ansteuerungsmöglichkeiten kann eine Redundanz-Aktivierungseinrichtung vorhanden sein. Diese deaktiviert für erste Betriebsbedingungen, insbesondere für funktionierende anderweitige Ansteuerung, die hydraulische Ansteuerung, während die Redundanz-Aktivierungseinrichtung für zweite Betriebsbedingungen, insbesondere nicht funktionierende anderweitige Ansteuerung, die hydraulische Ansteuerung aktiviert. Es versteht sich, dass beispielsweise die erste Betriebsbedingung mit der deaktivierten hydraulischen Ansteuerung eine gewisse Voreilung des Anhängersteuerventils herbeiführen kann, die bevorzugt über die elektrische, pneumatische und/oder elektropneumatische Ansteuerung realisiert werden kann, während nach Abschluss der Initiierung der Bremsbetätigung in der zweiten Betriebsbedingung dann die hydraulische Ansteuerung aktiviert werden kann.

In weiterer Ausgestaltung der Erfindung besitzt die Druckluftaufbereitungseinheit einen pneumatischen Anschluss, über welchen der Druckluftaufbereitungseinheit das pneumatische Signal eines Parkventils, also entweder ein Entlüftungsdruck oder ein Belüftungsdruck, zugeführt wird. Hierbei kann das pneumatische Parkventil ausschließlich für eine pneumatische Betätigung einer Feststellbremse des Zugfahrzeugs und/oder des Anhängers zuständig sein. Möglich ist auch, dass ein einziges Parkventil sowohl die hydraulische Beaufschlagung einer Parkbremse des Zugfahrzeugs als auch eine pneumatische Beaufschlagung einer Parkbremse eines Anhängers steuert. Beispielsweise kann hierzu in dem Parkventil ein Ventilkörper sowohl den pneumatischen Druck als auch den hydraulischen Druck steuern.

Die Verarbeitung des pneumatischen, durch das Parkventil beeinflussten Drucks kann beliebig sein. Für eine Ausgestaltung der Erfindung ist der pneumatische Anschluss für das Parkventil mit einem (u. U. invertierten) pneumatischen Steueranschluss des Anhängersteuerventils verbunden, wobei in eine derartige Verbindungsleitung auch weitere pneumatische Ventilelemente integriert sein können.

Für eine bevorzugte erfindungsgemäße Druckluftaufbereitungseinheit besitzt das Anhängersteuerventil zwei hydraulische Steueranschlüsse, was insbesondere von Vorteil ist bei einer zweikreisigen hydraulischen Bremsanlage des Zugfahrzeugs, die dann entsprechend in dem Anhängersteuerventil berücksichtigt werden kann. In diesem Fall ist es von Vorteil, wenn die Druckluftaufbereitungseinheit auch zwei hydraulische Anschlüsse besitzt, die jeweils mit einem Kreis der zweikreisigen hydraulischen Bremsanlage gekoppelt sind.

In weiterer Ausgestaltung der Erfindung besitzt die Druckluftaufbereitungseinheit, insbesondere das Anhängersteuerventil, ein manuelles Betätigungsorgan, über welches der Versorgungsdruck und/oder der Bremssteuerdruck für die Anhängerbremsanlage beeinflusst werden kann/können. Vorzugsweise ist das Betätigungsorgan ein Betätigungsorgan für eine Parkbremsfunktion der pneumatischen Anhängerbremsanlage. Die Integration dieses manuellen Betätigungsorgans ermöglicht die Gewährleistung einer weiteren Funktion der Druckluftaufbereitungseinheit.

Möglich ist durchaus, dass die Druckluftaufbereitungseinheit ausschließlich dazu dient, den Anhängerbremskreis mit Druckluft zu versorgen, was auch die Bereitstellung des Bremssteuerdrucks umfasst. Für eine Weiterbildung der erfindungsgemäßen Druckluftaufbereitungseinheit ist diese aber auch für die Versorgung mindestens eines weiteren Verbraucherkreises mit Druckluft verantwortlich, insbesondere eines Luftfederkreises des Zugfahrzeugs, von Nebenverbrauchern u. ä.

In weiterer Ausgestaltung der Erfindung ist die Druckluftaufbereitungseinheit mit einem elektrischen Anschluss für ein elektrisches Fußbremssignal und/oder für ein elektrisches Parksignal ausgestattet, welches beliebig erzeugt sein kann.

Eine weitere Lösung der der Erfindung zugrundeliegenden Aufgabe ist gegeben durch ein Nutzfahrzeug, welches mit einer hydraulischen Bremsanlage ausgestattet ist sowie einer Druckluftaufbereitungseinheit der zuvor erläuterten Art.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

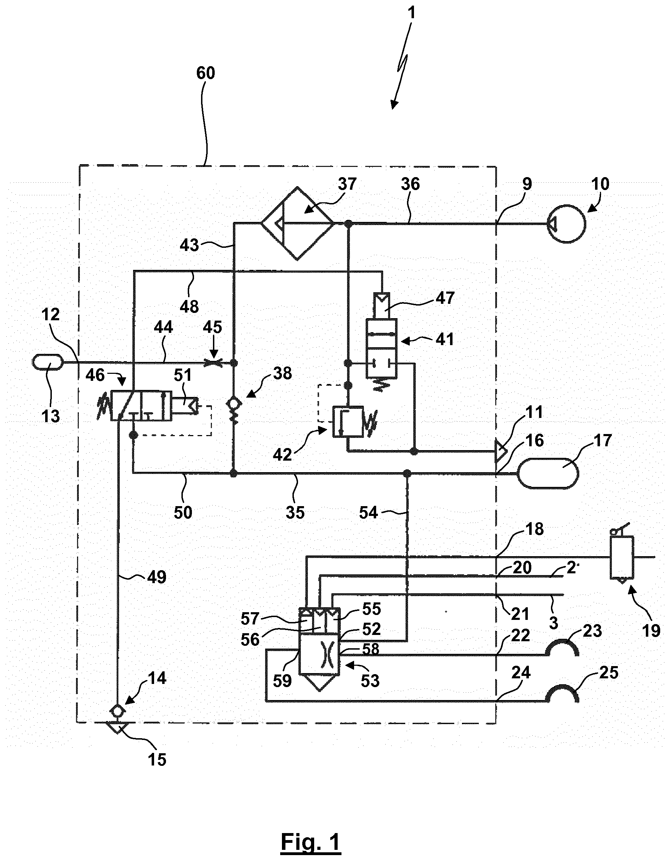

**Fig. 1 bis Fig. 8** zeigen schematisch unterschiedliche erfindungsgemäße Druckluftaufbereitungseinheiten mit weiteren über Anschlüsse mit diesen gekoppelten Komponenten.

### FIGURENBESCHREIBUNG

In den Figuren sind für unterschiedliche Ausführungsformen der Erfindung dargestellte Komponenten, welche zumindest teilweise hinsichtlich ihrer technischen Gestaltung, der Anschlüsse und/oder ihrer Funktion übereinstimmen, mit denselben Bezugszeichen gekennzeichnet.

Die erfindungsgemäße Druckluftaufbereitungseinheit 1 findet insbesondere Einsatz in Zusammenhang mit einer hydraulischen Bremsanlage, welche hier lediglich mit hydraulischen Bremsleitungen 2, 3 dargestellt ist, in Zusammenhang mit einem pneumatischen Parkventil 19 für einen Anhänger, einem Betriebsbremssignalgeber 5 mit einem elektrischen Betriebsbremssignal, einem Parkbremssignalgeber 6 mit einem elektrischen Parkbremssignal und/oder mindestens einem Drucksensor 7, 8 zur Erfassung eines hydraulischen Drucks in einer hydraulischen Bremsleitung für eine hydraulische Betriebsbremse oder Parkbremse. Die Druckluftaufbereitungseinheit 1 verfügt optional, alternativ oder kumulativ über folgende Anschlüsse:
- einen Versorgungsanschluss 9, über welchen die Druckluftaufbereitungseinheit 1 mit einem Kompressor 10 verbindbar ist;
- einen Entlüftungsanschluss 11;
- einen Anschluss 12, über welchen die Druckluftaufbereitungseinheit 1 mit einem Regenerationsbehälter 13 verbindbar ist;
- einen über ein Rückschlagventil 14 gesicherten Entlüftungsanschluss 15;
- einen Anschluss 16 für einen Behälter 17 eines Anhängerbremskreises;
- einen Anschluss 18 für ein zumindest auch pneumatisches Parkventil 19;
- hydraulische Anschlüsse 20, 21 für die hydraulischen Bremsleitungen 2, 3, die unterschiedlichen Kreisen der hydraulischen Bremsanlage zugeordnet sind;
- einen Anschluss 22, über welchen die Druckluftaufbereitungseinheit 1 mit einem Kupplungskopf Vorrat 23 verbindbar ist;
- einen Anschluss 24, über welchen die Druckluftaufbereitungseinheit 1 mit einem Kupplungskopf Bremse 25 verbindbar ist;
- einen Anschluss 26, über welchen die Druckluftaufbereitungseinheit 1 mit einem Behälter 27 eines weiteren Verbraucherkreises 28, beispielsweise einem Nebenverbraucherkreis oder Luftfederkreis verbindbar ist;
- einen Steuerausgang 29, über den die Druckluftaufbereitungseinheit 1 mit einem Steueranschluss 30 des Kompressors 10 verbindbar ist;
- einen Anschluss 31, über welchen die Druckluftaufbereitungseinheit 1 das Parkventil 19 mit Druckluft versorgen kann;
- einen elektrischen Anschluss 32 für ein elektrisches Betriebsbremssignal des Betriebsbremssignalgebers 5;
- einen elektrischen Anschluss 33 für ein elektrisches Parkbremssignal eines Parkbremssignalgebers 6;
- mindestens einen elektrischen Anschluss 34 für das Drucksignal der Drucksensoren 7, 8.

Soweit zuvor nicht anders spezifiziert handelt es sich bei den genannten Anschlüssen um pneumatische Anschlüsse.

Gemäß **Fig. 1** verfügt die Druckluftaufbereitungseinheit über die Anschlüsse 9, 11, 12, 15, 16, 18, 20, 21, 22, 24. Die Zuführung der von dem Kompressor 10 geförderten Druckluft von dem Versorgungsanschluss 9 zu der Zentralleitung 35 erfolgt über eine Eingangsleitung 36 und einen Lufttrockner 37 mit nachgeordnetem Rückschlagventil 38, welches in Richtung der Zentralleitung 35 öffnet. Von der Eingangsleitung 36 zweigt eine Zweigleitung 39 ab, welche über einen Leitungspfad 40 mit darin angeordnetem Druckregelventil 41 in Ausbildung als pneumatisch angesteuertes 2/2-Wegeventil und einen parallelen Leitungspfad 32 mit darin angeordnetem Sicherheitsventil 42 mit der Entlüftung 11 verbunden ist. Die Ausgangsleitung 43 des Lufttrockners 37 ist stromaufwärts des Rückschlagventils 38 mit einer Zweigleitung 44 mit integrierter Drossel 45 verbunden, die über den Anschluss 12 den Regenerationsbehälter 13 speist. Das Druckregelventil 41 wird pneumatisch gesteuert über ein pneumatisch gesteuertes Steuerventil 46 in Ausbildung als 3/2-Wegeventil. In der in Fig. 1 wirksamen Schaltstellung verbindet das Steuerventil 46 den Steueranschluss 47 des Druckregelventils 41 über eine Steuerleitung 48 mit der Entlüftungsleitung 49 mit integriertem Rückschlagventil 14 und damit mit dem Entlüftungsanschluss 15. In der anderen Schaltstellung verbindet das Steuerventil 46 eine Zweigleitung 50 der Zentralleitung 35 mit der Steuerleitung 48 und damit mit dem Steueranschluss 47. Dem pneumatischen Steueranschluss 51 wird als Steuerdruck der Druck in der Zweigleitung 50 und damit in der Zentralleitung 35 zugeführt. Mit der Befüllung der Druckluftanlage steigt der Druck in der Zentralleitung 35 zunächst an, während sich das Steuerventil 46 in der Schaltstellung gemäß Fig. 1 befindet. Das Druckregelventil 41 befindet sich in der Sperrstellung und das Sicherheitsventil 42 nimmt ebenfalls eine Sperrstellung ein. Somit kann der Kompressor 10 weiter Druckluft in die Zentralleitung 35 und stromabwärtige Komponenten der Druckluftanlage fördern. Dies führt zu einem Anstieg des Drucks in der Zentralleitung 35 und einem hiermit einhergehenden Anstieg des Drucks an dem Steueranschluss 51 des Steuerventils 46. Wird ein vorgegebener oder einstellbarer Schwellwert des Drucks an dem Steueranschluss 51 überschritten, schaltet das Steuerventil 46 in seine andere Schaltstellung um, was eine Entlüftung des Steueranschlusses 47 des Druckregelventils 41 zur Folge hat, sodass das Druckregelventil 41 eine Verbindung zwischen der Eingangsleitung 46 und der Entlüftung 11 schafft. Demgemäß fördert nun für das Erreichen des vorgegebenen Drucks in der Zentralleitung 35 der Kompressor 10 Druckluft in die Umgebung. Gleichzeitig kann Druckluft aus dem Regenerationsbehälter 13 mit Beeinflussung des Volumenstroms über die Drossel 45 über die Ausgangsleitung 43 in umgekehrter Strömungsrichtung gegenüber der Lastphase den Lufttrockner 37 durchströmen, womit eine Regeneration des Lufttrockners 37 erfolgt. Die feuchte Regenerationsluft wird dann ebenfalls über das Druckregelventil 41 dem Entlüftungsanschluss 11 zugeführt. Fällt infolge eines Druckluftverbrauchs in den Verbraucherkreisen der Druck in der Zentralleitung 35 wieder ab, schaltet das Steuerventil 46 wieder in die in Fig. 1 wirksame Schaltstellung, womit der erläuterte Regenerationsbetrieb und das Fördern des Kompressors 10 in die Umgebung beendet wird und vielmehr wieder eine Lastphase herbeigeführt wird, in welcher der Kompressor 10 Druckluft zu den Verbraucherkreisen fördern kann.

Gemäß Fig. 1 wird von der Zentralleitung 35 lediglich ein Anhängerbremskreis mit Druckluft versorgt. Hierzu gelangt Druckluft in der Lastphase von der Zentralleitung 35 über den Anschluss 16 zu dem Behälter 17. Die Druckluft aus dem Behälter 17 wird einem Versorgungsanschluss 52 eines Anhängersteuerventils 53 zugeführt, indem Druckluft von dem Behälter 17 in umgekehrter Richtung über den Anschluss 16 in die Druckluftaufbereitungseinheit 1 eintritt und über eine von der Zentralleitung 35 abzweigende Zweigleitung 54 zu dem Versorgungsanschluss 52 gelangt.

Gemäß Fig. 1 verfügt das Anhängersteuerventil 53 über hydraulische Steueranschlüsse 55, 56, die jeweils über hydraulische Leitungen mit den hydraulischen Anschlüssen 20, 21 und damit mit den hydraulischen Bremsleitungen 2, 3 verbunden sind. Des Weiteren besitzt das Anhängersteuerventil 53 einen pneumatischen Steueranschluss 57, welcher über eine pneumatische Verbindungsleitung mit dem Anschluss 18 und über diesen mit dem pneumatischen Parkventil 19 verbunden ist. Das Anhängersteuerventil 53 besitzt einen Ausgangsanschluss 58, über welchen der Druck in der Zweigleitung 54 und damit Druckluft aus dem Behälter 17 oder der Zentralleitung 35 dem Anschluss 22 und damit dem Kupplungskopf Vorrat 23 zur Verfügung gestellt wird, was ohne Veränderung des Drucks oder unter geeigneter, auch betriebsabhängiger Modifikation des Drucks erfolgen kann. Darüber hinaus verfügt das Anhängersteuerventil 53 über einen Ausgangsanschluss 59, an welchem der Bremssteuerdruck ausgesteuert wird, welcher über eine pneumatische Verbindungsleitung dem Anschluss 24 und damit dem Kupplungskopf Bremse 25 zugeführt wird. Der Bremssteuerdruck an dem Ausgangsanschluss 59 wird hierbei in Abhängigkeit des Drucks an den hydraulischen Steueranschlüssen 55, 56 des Anhängersteuerventils 53 und/oder des pneumatischen Drucks an dem pneumatischen Steueranschluss 57 durch das Anhängersteuerventil 53 gesteuert. Für die Betätigung der hydraulischen Betriebsbremsanlage erfolgt für das dargestellte Ausführungsbeispiel vorzugsweise keine Beeinflussung des Bremssteuerdrucks über den Steueranschluss 57 - vielmehr wird der Bremssteuerdruck für dieses Ausführungsbeispiel in Abhängigkeit des hydraulischen Bremsdrucks in den beiden hydraulischen Bremsleitungen 2, 3 und an den hydraulischen Steueranschlüssen 55, 56 ausgesteuert. Erfolgt hingegen eine Betätigung des Parkventils 19, führt der pneumatische Druck an dem pneumatischen Steueranschluss 57 dazu, dass ein Bremssteuerdruck ausgesteuert wird, welcher zur Betätigung der Anhängerbremsanlage führt, sodass auch an dem Anhänger eine Parkbremswirkung herbeigeführt werden kann. Hierbei kann das Parkventil 19 ausschließlich zur manuellen Betätigung der pneumatischen Bremsanlage des Anhängers genutzt werden. Wie bereits eingangs erwähnt kann über das Parkventil 19 auch kumulativ eine Betätigung einer pneumatischen Parkbremse des Zugfahrzeugs erfolgen. Ebenfalls möglich ist, dass das Parkventil 19 einerseits über die pneumatische Beaufschlagung des Anschlusses 18 die Betätigung der pneumatischen Bremsanlage des Anhängers zur Herbeiführung einer Parkbremswirkung des Anhängers ansteuert und andererseits auch einen Hydraulikdruck steuert für eine hydraulische Parkbremswirkung des Zugfahrzeugs. Vielfältige weitere Ausgestaltungen sind möglich - beispielsweise kann ein Sensor in dem Parkventil 19 den Parkbremswunsch des Fahrers erfassen und über das elektrische Ausgangssignal eine Steuerung der Parkbremse des Zugfahrzeugs erfolgen, sei es einer hydraulischen, einer elektrischen oder mechanischen Parkbremse mit einem geeigneten elektrisch angesteuerten Ventil oder Aktuator. Möglich ist auch, dass ein anderweitiges Betätigungsorgan für eine Parkbremse des Zugfahrzeugs ein elektrisches Signal erzeugt. In diesem Fall kann das Parkventil 19 nicht manuell umgeschaltet werden, sondern über einen geeigneten Aktuator nach Maßgabe des vorgenannten elektrischen Signal. Für das dargestellte Ausführungsbeispiel sind die Bauelemente der Druckluftaufbereitungseinheit 1 wie dargestellt in dem gestrichelt dargestellten Gehäuse 60 zusammengefasst.

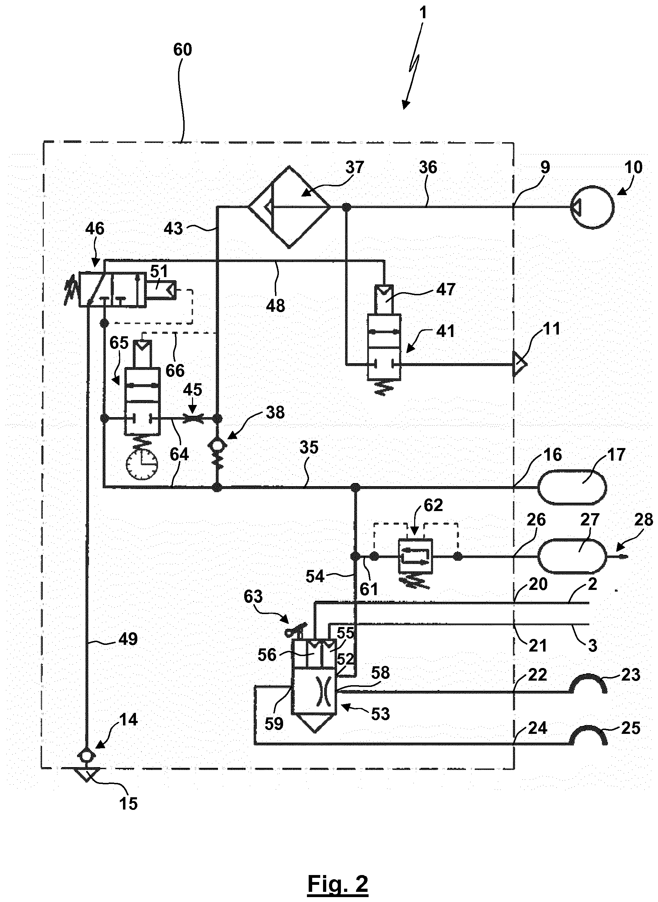

Bei ansonsten Fig. 1 entsprechender Ausgestaltung ist für die Druckluftaufbereitungseinheit 1 gemäß **Fig.2** über eine weitere Zweigleitung 61 der Zentralleitung 35 und ein in dieser angeordnetes Kreisschutzventil 62, hier ein Überströmventil mit begrenzter Rückströmung, der Anschluss 26 und hierüber der Behälter 27 und der Verbraucherkreis 28 gespeist. Abweichend zu Fig. 1 ist hier der Anschluss 18 für das Parkventil 19 entfallen. Das Anhängersteuerventil 53 besitzt lediglich die hydraulischen Steueranschlüsse 55, 56, die über die Anschlüsse 20, 21 mit den hydraulischen Bremsleitungen 2, 3 verbunden sind. Darüber hinaus besitzt das Anhängersteuerventil 53 ein manuelles Betätigungsorgan 63, mit dessen Betätigung die Anhängerbremsanlage gelöst oder aktiviert werden kann, was vorzugsweise durch Beeinflussung des Bremssteuerdrucks an dem Ausgangsanschluss 59 je nach Stellung des Betätigungsorgans 63 erfolgt. Möglich ist, dass das Betätigungsorgan 63 in einer Stellung mit gelöster oder aktivierter Anhängerbremsanlage rastiert werden kann.

Des Weiteren erfolgt für die Ausführungsform gemäß Fig. 2 die Regeneration des Lufttrockners 37 nicht über einen zusätzlichen Regenerationsbehälter 13. Vielmehr wird die Regenerationsluft dem Behälter 17 entnommen, sodass zuvor in der Lastphase getrocknete Druckluft in umgekehrter Richtung durch die Zentralleitung 35 strömt. In diesem Fall ist das Rückschlagventil 38 durch eine Bypassleitung 64 umgangen, in welcher ein Bypassventil 65 in Ausgestaltung als 2/2-Wegeventil angeordnet ist. Das Bypassventil 65 ist pneumatisch angesteuert über die gestrichelt dargestellte Steuerleitung 66, welche von der Ausgangsleitung 43 abzweigt.

Fig. 2 zeigt die Druckluftaufbereitungseinheit 1 während der Lastphase, in welcher das Bypassventil 65 seine Sperrstellung einnimmt und das Steuerventil 46 seine Entlüftungsstellung einnimmt mit der Folge, dass sich auch das Druckregelventil 41 in seiner Sperrstellung befindet. Mit hinreichendem Druckanstieg in der Ausgangsleitung 43 und damit in der Zentralleitung 35, an dem Steueranschluss 51 und in der Steuerleitung 66 schalten das Druckregelventil 41, das Steuerventil 46 und das Bypassventil 65 um in die andere Betriebsstellung. In dieser öffnet das Bypassventil 65 die Bypassleitung 64, so dass Druckluft aus dem Behälter 17 unter Umgehung des Rückschlagventils 38 über die Drossel 45 in umgekehrter Richtung den Lufttrockner 37 durchströmen kann mit anschließendem Austritt über den Entlüftungsanschluss 11 durch das Druckregelventil 41 in seiner Durchlassstellung. Das Bypassventil 65 ist mit einer Timer-Funktion ausgestattet, so dass dieses nach einer vorbestimmten Zeit oder einer von den Betriebsbedingungen abhängigen Zeit automatisiert die Regenerationsphase beendet und wieder seine Sperrstellung einnimmt, auch wenn unter Umständen weiterhin das Steuerventil 46 seine Belüftungsstellung einnimmt und das Druckregelventil 41 seine Durchlassstellung einnimmt, sodass der Kompressor 10 Druckluft in die Umgebung fördert. Grundsätzlich möglich ist auch, dass das Regenerationsventil 65 bereits während der Befüllung vor dem Steuerventil 46 schaltet. Eine Regeneration erfolgt auch dann erst mit der Schaltung des Steuerventils 46.

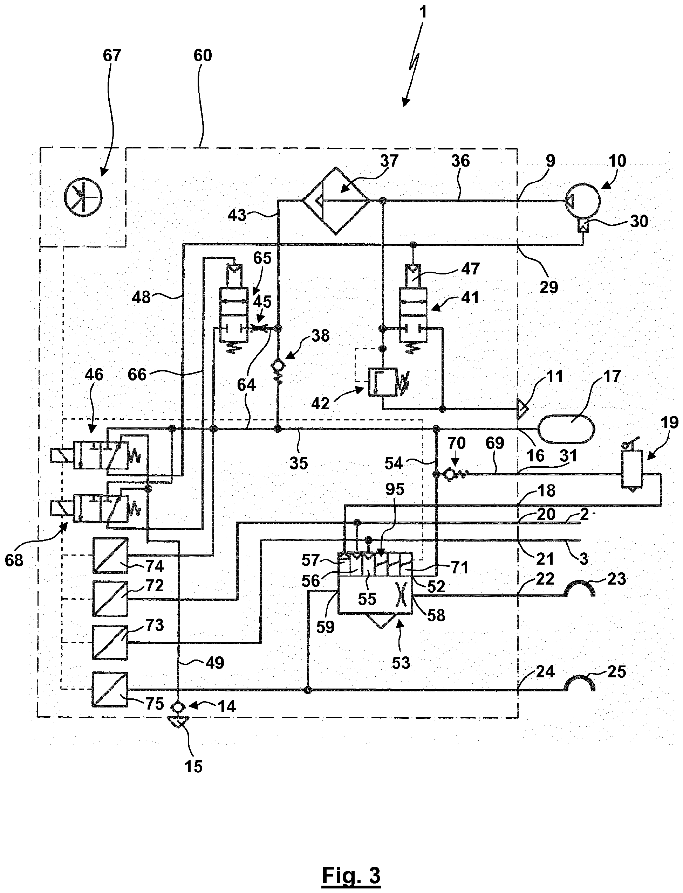

Die Ausführungsformen gemäß Fig. 1 und 2 sind nicht mit elektronischen Komponenten ausgestattet. Hingegen findet gemäß **Fig. 3** eine elektronische Steuereinheit 67 Einsatz. Das Steuerventil 46 ist in diesem Fall elektrisch von der Steuereinheit 67 angesteuert. Die Steuerleitung 48, deren Steuerdruck von dem Steuerventil 46 gesteuert wird, dient auch hier der Ansteuerung des Steueranschluss 47 des Druckregelventils 41. Zusätzlich ist die Steuerleitung 48 verbunden mit dem Steueranschluss 29 der Druckluftaufbereitungseinheit 1, der mit dem Steueranschluss 30 des Kompressors 10 verbunden ist. Das Bypassventil 65 in der Bypassleitung 64 für das Rückschlagventil 38 ist vorgesteuert über eine Steuerleitung 66, deren Steuerdruck in diesem Fall gesteuert wird durch ein von der Steuereinheit 67 angesteuertes Steuerventil 68 in Ausbildung als 3/2-Magnetventil, mittels dessen wahlweise die Steuerleitung 66 mit dem Entlüftungsanschluss 15 oder der Zentralleitung 35 verbindbar ist.

Von der Zweigleitung 54 zweigt eine weitere Zweigleitung 69 mit integriertem Rückschlagventil 70 ab, welche über den Anschluss 31 einen Versorgungsanschluss des Parkventils 19 speist.

Das Anhängersteuerventil 53 besitzt entsprechend dem Anhängersteuerventil gemäß Fig. 1 hydraulische Steueranschlüsse 55, 56, welche über die Anschlüsse 20, 21 mit den hydraulischen Bremsleitungen 2, 3 verbunden sind, sowie einen pneumatischen Steueranschluss 57, welcher über den Anschluss 18 mit dem Parkventil 19 verbunden ist. Zusätzlich besitzt das Anhängersteuerventil 53 gemäß Fig. 3 mindestens einen elektrischen Steueranschluss 71, über welchen das Anhängersteuerventil 53 von der Steuereinheit 67 angesteuert werden kann. Der Steuereinheit 67 werden die Drucksignale von Drucksensoren 72-75 zugeführt. Die Drucksensoren 72, 73 erfassen jeweils den Druck an einem Anschluss 20, 21, also den Druck in der hydraulischen Bremsleitung 2, 3 bzw. an dem hydraulischen Steueranschluss 55, 56. Über den Drucksensor 74 wird der Druck in der Zentralleitung 35 erfasst. Schließlich erfasst der Drucksensor 75 den von dem Anhängersteuerventil 53 ausgesteuerten Bremssteuerdruck, also den Druck an dem Anschluss 24 bzw. dem Kupplungskopf Bremse 25. Eine derartige Ausgestaltung eröffnet vielfältige optionale, alternative oder kumulative Möglichkeiten:
- Möglich ist zunächst, dass durch die Erfassung des Bremssteuerdrucks über den Sensor 75 eine Regelung derart erfolgt, dass zusätzlich zu der Berücksichtigung des hydraulischen Bremsdrucks an den hydraulischen Steueranschlüssen 55, 56 über die Ansteuerung des elektrischen Steueranschlusses 71 eine Beeinflussung oder Regelung des Bremssteuerdrucks erfolgen kann.
- Möglich ist, dass über die Sensoren 72, 73 im Normalbetrieb der hydraulische Bremsdruck in den hydraulischen Bremsleitungen 2, 3 erfasst wird. Die Steuereinheit 67 ermittelt über die erfassten Drucksignale eine geeignete elektrische Ansteuerung des elektrischen Steueranschlusses 71, welcher im Normalbetrieb zuständig ist für die Steuerung oder Regelung des Bremssteuerdrucks. Über ein geeignetes ergänzendes Steuersignal kann die Steuereinheit 67 auch eine Redundanz-Aktivierungseinrichtung 95 derart ansteuern, dass eine Steuerung des Bremssteuerdrucks durch die Steueranschlüsse 55, 56, 57 in dem Normalbetrieb nicht möglich ist, so dass eine alleinige elektronische Steuerung oder Regelung des Bremssteuerdrucks erfolgt. In einem Sonderbetrieb, insbesondere einem Notfallbetrieb ohne elektrische Leistungsversorgung, erfolgt keine Steuerung über den elektrischen Steueranschluss 71, wobei in diesem Fall die Redundanz-Aktivierungseinrichtung 95 dafür sorgen kann, dass eine Steuerung über die hydraulischen Steueranschlüsse 55, 56 und/oder über den pneumatischen Steueranschluss 57 erfolgt.
- Über eine elektrische Ansteuerung des elektrischen Steueranschlusses 71 kann auch bei einem schnellen Aufbau einer Bremskraft zusätzlich zu der vorhandenen hydraulischen Steuerung über die Steueranschlüsse 55, 56 eine Voreilung oder ein schnellerer Aufbau des Bremssteuerdrucks für den Anhänger herbeigeführt werden, vgl. auch die Ausgestaltung des Anhängersteuerventils gemäß DE 10 2009 054 191 A1.
- Ebenfalls möglich ist, auch für den Fall, dass kein hydraulischer Bremsdruck in den Bremsleitungen 2, 3 vorliegt, dass über ein elektrisches Steuersignal der Steuereinheit 67 ein Bremssteuerdruck erzeugt wird, beispielsweise zur Erhöhung der Fahrstabilität oder für eine Beeinflussung einer Kopplungskraft zwischen Zugfahrzeug und Anhänger oder für eine Streckbremsfunktion.

Während der Lastphase des Kompressors 10 ist die Steuerleitung 48 entlüftet. Liegt hingegen keine Lastphase vor, sodass die Steuerleitung 48 belüftet ist, kann selektiv in der in Fig. 3 wirksamen Schaltstellung des Bypassventils 65 eine Regeneration unterbunden werden kann, während die Regeneration durch Umschalten des Bypassventils 65 über das Steuerventil 68 gezielt begonnen und beendet werden kann.

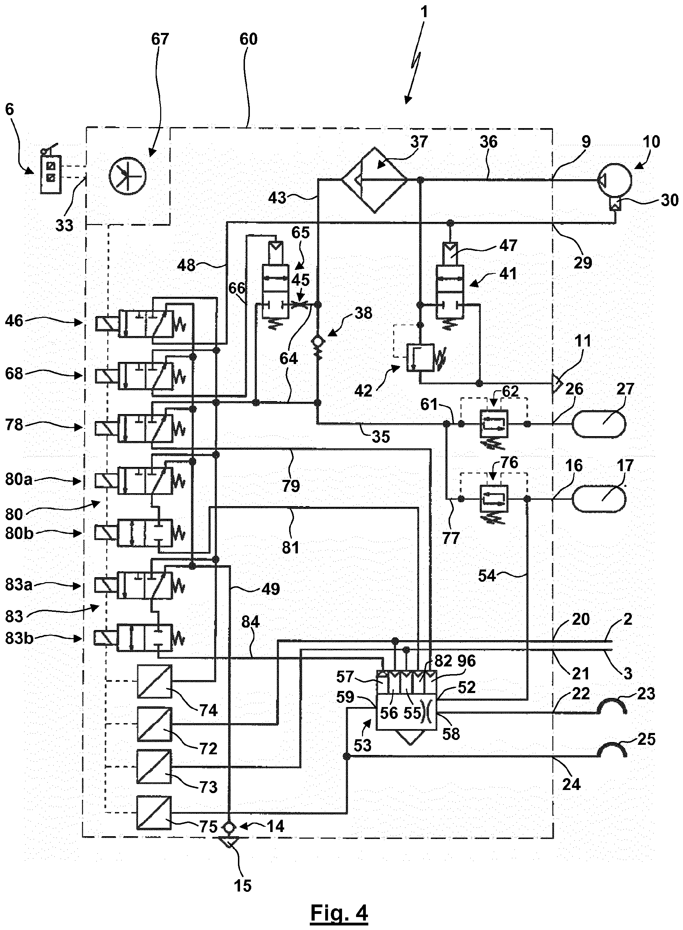

Gemäß **Fig. 4** erfolgt über die Zentralleitung 35 einerseits eine Speisung des Behälters 27 über den Anschluss 26 und das Kreisschutzventil 62 in einer Zweigleitung 61 sowie andererseits des Behälters 17 über den Anschluss 16 und ein Kreisschutzventil 76 in einem Leitungszweig 77. Auch das Kreisschutzventil 76 ist hier als Überströmventil mit begrenzter Rückströmung ausgebildet. In diesem Fall zweigt die Zweigleitung 54 zur Druckluftversorgung des Versorgungsanschlusses 52 des Anhängersteuerventils 53 zwischen dem Kreisschutzventil 76 und dem Anschluss 16 ab.

Gemäß Fig. 4 findet ein weiteres Steuerventil 78 Einsatz, welches als 3/2-Wege-Magnetventil ausgebildet ist und eine Steuerleitung 79 je nach Schaltstellung mit der Zentralleitung 35 oder dem Entlüftungsanschluss 15 verbindet. Die Steuerleitung 79 ist mit einem pneumatischen Steueranschluss 96 des Anhängersteuerventils 53 verbunden. Je nach Schaltstellung des Steuerventils 78, also je nach Ansteuerung desselben durch die Steuereinheit 67, kann über die Be- und Entlüftung des Steueranschlusses 96 des Anhängersteuerventils 53 ein Bremssteuerdruck erzeugt werden, sodass durch Betätigung des Steuerventils 78 die Anhängerbremsanlage betätigt oder gelöst werden kann. Somit kann über die Steuereinheit 67 und das Steuerventil 78 sowie über den Bremssteuerdruck eine Parkbremswirkung erzeugt oder aufgehoben werden. Ebenfalls möglich ist die Ansteuerung des Steuerventils 78 zur Erzeugung einer Bremswirkung in einer Notbremssituation. Für die dargestellte Ausführungsform kann mittels des Steuerventils 78 nur die maximale Bremswirkung erzeugt werden oder die Bremswirkung aufgehoben werden. Durchaus möglich ist, dass bei Ausbildung des Steuerventils 78 insbesondere als pulsweitenmodelliertes Ventil eine abgestufte Bremswirkung erzeugt werden kann. Mit den Steuerungsmöglichkeiten durch das Steuerventil 78 ist somit in der Druckluftaufbereitungseinheit 1 ein erster pneumatischer Steuerkreis gebildet. Ein zweiter Steuerkreis für den Anhänger ist in der Druckluftaufbereitungseinheit 1 gebildet mit einer Steuerventileinheit 80, die mit einem ersten Steuerventil 80a und einem zweiten Steuerventil 80b ausgebildet ist. Das erste Steuerventil 80a ist als 3/2-Wege-Magnetventil ausgebildet mit einer Belüftungsstellung und einer Entlüftungsstellung. Das erste Steuerventil 80a ist über das zweite Steuerventil 80b mit der pneumatischen Steuerleitung 81 verbunden. Das zweite Steuerventil 80b ist ein 2/2-Wege-Magnetventil. Während in der Sperrstellung des zweiten Steuerventils 80b ein Druck in der Steuerleitung 81 gehalten wird, kann für das zweite Steuerventil 80b in seiner Durchlassstellung je nach Schaltstellung des ersten Steuerventils 80a die Steuerleitung 81 be- oder entlüftet werden. Die Steuerleitung 81 ist mit einem weiteren pneumatischen Steueranschluss 82 des Anhängersteuerventils 53 verbunden. Über die Steuerventileinheit 80 kann somit je nach Druck in der Steuerleitung 81 ein abgestufter Bremssteuerdruck durch das Anhängersteuerventil 53 ausgesteuert werden. Wird, wie in Fig. 4 dargestellt, der Bremssteuerdruck über den Drucksensor 75 erfasst, kann mittels der Ansteuerung der Steuerventileinheit 80 auch eine Regelung des Bremssteuerdrucks erfolgen.

Gemäß Fig. 4 wird der Druckluftaufbereitungseinheit 1, hier der Steuereinheit 67 derselben, über den Anschluss 33 ein elektrisches Signal des Parkbremssignalgebers 6, insbesondere einem Park- oder Handbremsventilschalter, zugeführt. Die Steuerung einer Parkbremsfunktion erfolgt je nach Signal an dem Anschluss 33 über eine weitere Ventileinheit 83, welche entsprechend der Ventileinheit 80 ausgebildet ist, sodass in einer Steuerleitung 84 ein Steuerdruck gehalten werden kann oder die Steuerleitung 84 be- oder entlüftet werden kann. Der Steueranschluss 57 des Anhängersteuerventils 53 ist mit der Steuerleitung 84 verbunden, sodass die Funktion des Parkventils 19 gemäß Fig. 1 in diesem Fall über die manuelle Betätigung des Parkbremssignalgebers 6, den Anschluss 33, die Erzeugung eines Steuersignals über die Steuereinheit 67 und die Beeinflussung des Steuerdrucks in der Steuerleitung 84 über die Steuerventileinheit 83 erfolgen kann. Während somit der Steueranschluss 57 gemäß Fig. 1 über eine manuell betätigte reine pneumatische Steuerleitung beaufschlagt wird, erfolgt hier die Steuerkette über die manuelle Betätigung des Parkbremssignalgebers 6, das elektrische Ausgangssignal des Parkbremssignalgebers 6, das elektrische Steuersignal der Steuereinheit 67 und das pneumatische Steuersignal in der Steuerleitung 84.

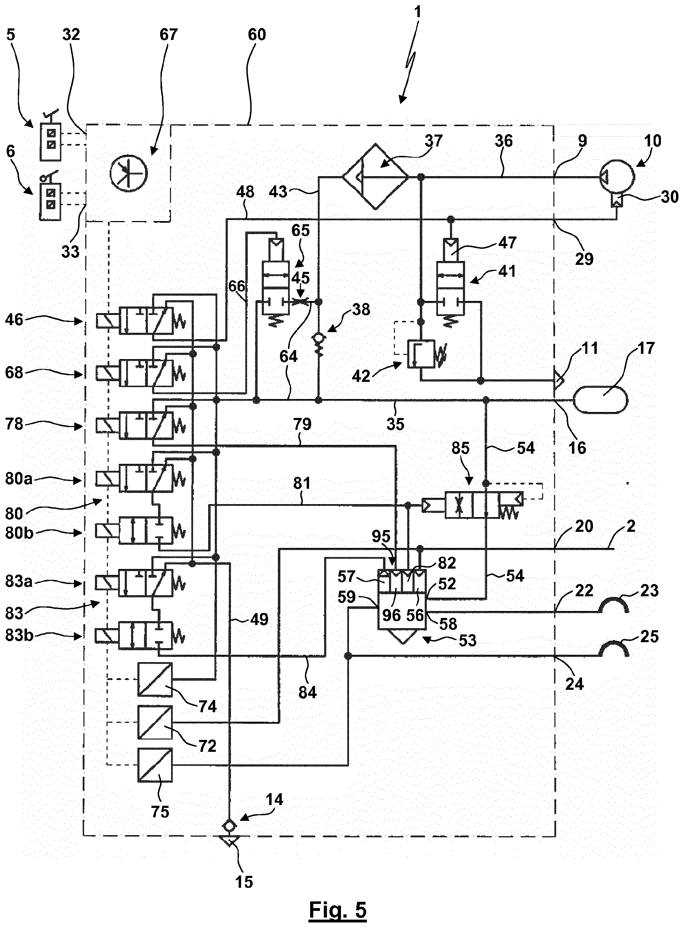

In dem in **Fig. 5** dargestellten Ausführungsbeispiel wird der Druckluftaufbereitungseinheit 1 zusätzlich zu dem Bremssignal über die hydraulische Bremsleitung 2 an dem Anschluss 20 und dem Steueranschluss 56 ein elektrisches Betriebsbremssignal über den Anschluss 32 zugeführt, welches dem Betriebsbremssignalgeber 5 entstammt. In diesem Fall kann über die Steuerventileinheit 80 und die Steuerleitung 79 sowie den Steueranschluss 96 ein Bremssteuerdruck erzeugt werden, welcher von der Steuereinheit 67 anhand des Signals an dem Anschluss 32 erzeugt wird.

Durchaus möglich ist, dass ein Steuerventil 78 wie zuvor für Fig. 4 erläutert verwendet wird. Möglich ist aber auch, dass dieses Steuerventil 78 oder ein in Fig. 5 nicht dargestelltes ergänzendes Ventil zu einem anderen Zweck eingesetzt wird. In diesem Fall wird über die Be- und Entlüftung des Steueranschlusses 96 durch das Steuerventil 78 die Ansteuerung über den Steueranschluss 56 über den Hydraulikdruck deaktiviert, sodass vorrangig die elektropneumatische Ansteuerung des Anhängersteuerventils 53 über die Steuerventileinheit 80 erfolgen kann. Lediglich in besonderen Betriebssituationen wird der Druck an dem Steueranschluss 96 über das Steuerventil 78 so verändert, dass die Redundanz-Aktivierungseinrichtung 95 das Anhängersteuerventil 53 so umschaltet, dass nicht die Steuerung des Bremssteuerdrucks entsprechend dem Druck in der Steuerleitung 81 und entsprechend der elektropneumatischen Regelung mittels der Steuerventileinheit 80 erfolgt, sondern vielmehr dann in einer Redundanz-Ebene die Aussteuerung des Bremssteuerdrucks entsprechend der hydraulischen Beaufschlagung des hydraulischen Steueranschlusses 56 erfolgt. Es versteht sich, dass auch hier über die Steuerventileinheit 80 auf Grundlage des vom Drucksensor 75 erfassten Bremssteuerdrucks eine Regelung des Bremssteuerdrucks möglich ist während der elektropneumatische Ansteuerung des Anhängersteuerventils 53.

Gemäß Fig. 5 ist in der Zweigleitung 54, die der Versorgung des Versorgungsanschlusses 52 des Anhängersteuerventils 53 dient, ein Notbremsventil 85 angeordnet. Wird beispielsweise durch einen Vergleich der Drucksignale der Drucksensoren 72, 75 mittels der Steuereinheit 67 erkannt, dass sich eine Leckage an dem Kupplungskopf Bremse 25 ergibt, kann das Notbremsventil 85 von der im Normalbetrieb und in Fig. 5 wirksamen Durchlassstellung von der Steuerventileinheit 80 umgeschaltet werden in eine gedrosselte Durchlassstellung. Diese hat zur Folge, dass an dem Versorgungsanschluss 52 weniger Druckluft bereitgestellt wird, was letztendlich zur Folge hat, dass der Druck an dem Kupplungskopf Vorrat 23 absinkt, womit gezielt eine Notbremsfunktion des Anhängerbremsventils ausgelöst werden kann. Möglich ist, dass diese Notbremsfunktion des Anhängerbremsventils die Betriebsbremse anspricht, die für ordnungsgemäß funktionierende Druckluftanlage auch über den Bremssteuerdruck angesprochen würde. Ebenfalls möglich ist, dass die genannte Notbremsfunktion, welche letztendlich wie erläutert durch das Notbremsventil 85 ausgelöst wird, von dem Anhängerbremsventil an den Federspeicher-Feststellbremsen erzeugt wird. Möglich ist, dass das Notbremsventil 85 wie dargestellt auch mit einer pneumatischen Steuerleitung beaufschlagt ist, sodass insbesondere die genannte Umschaltung des Notbremsventils 85 in die Drosselstellung erst erfolgt, wenn ein gewisser Druckabfall in dem Behälter 17 bzw. in der Leitung 54 infolge des Defekts in der Bremssteuerleitung eingetreten ist. Die gestrichelt dargestellte Steuerleitung hat als Signal auf die Schaltung des Notbremsventils 85 Einfluss, indem hierdurch der Zeitpunkt der Umschaltung beeinflusst wird, wie dies in DE 10 2008 048 208 B4 in Absatz [0064] beschrieben ist.

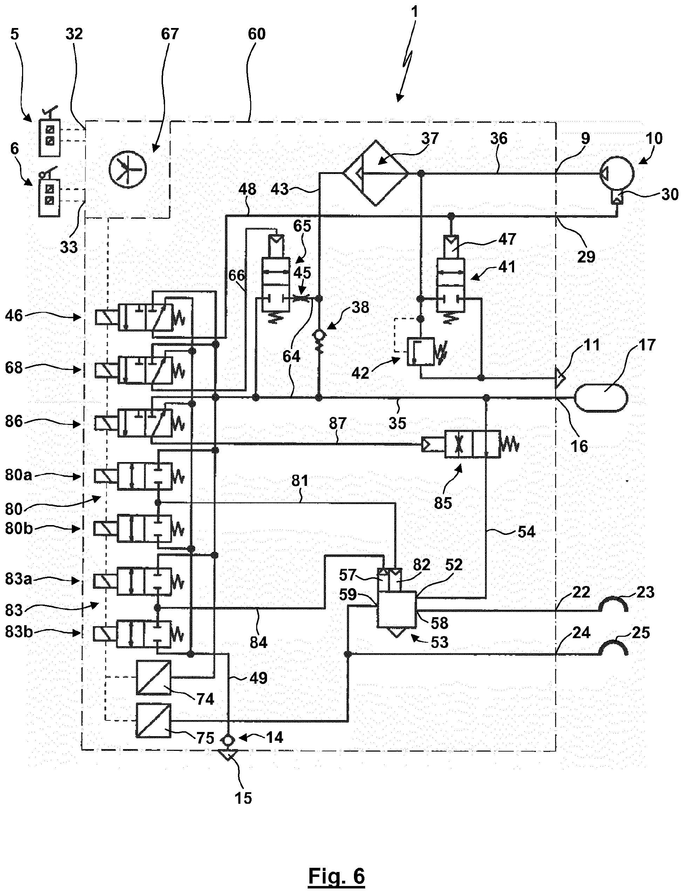

Auch gemäß **Fig. 6** erfolgt die pneumatische Beaufschlagung eines Steueranschlusses 82 zur Erzeugung eines Bremssteuerdrucks für eine Betriebsbremsung über eine Steuerventileinheit 80 sowie die pneumatische (u. U. invertierte) Beaufschlagung eines Steueranschlusses 57 für eine Erzeugung eines Bremssteuerdrucks zur Erzeugung einer Parkbremswirkung des Anhängers über eine Ventileinheit 83, welche jeweils nach Maßgabe des Betriebsbremssignalgebers 5 und des Parkbremssignalgebers 6 und/oder der Steuereinheit 67 angesteuert werden. Bei entsprechenden Drücken in den Steuerleitungen 81, 84 sind allerdings hier die Steuerventileinheiten 80, 83 jeweils mit einem ersten Steuerventil 80a, 83a gebildet, die als 2/2-Wege-Magnetventile ausgebildet sind mit einer Belüftungsstellung mit Verbindung der zugeordneten Steuerleitungen 81, 84 mit der Zentralleitung sowie jeweils mit einem zweiten Steuerventil 80b, 83b in Ausbildung als 2/2-Wege-Magnetventile mit einer Schaltstellung, in welcher die zugeordnete Steuerleitung 81, 84 mit dem Entlüftungsanschluss 15 verbunden ist. Zusätzlich ist für die Ausführungsform gemäß Fig. 6 ein weiteres Steuerventil 86 in Ausbildung als 3/2-Wege-Magnetventil vorgesehen, welches von der Steuereinheit 67 in eine Belüftungsstellung und eine Entlüftungsstellung umschaltbar ist. Die zugeordnete Steuerleitung 87 ist mit dem pneumatischen Steueranschluss des Notbremsventils 85 verbunden. Mit Druckbeaufschlagung der Steuerleitung 87 kann das Notbremsventil 85 von der in Fig. 6 wirksamen Durchlassstellung in die Drosselstellung umgeschaltet werden, womit die Notbremsfunktion des Anhängerbremsventils wie zuvor erläutert ausgelöst werden kann.

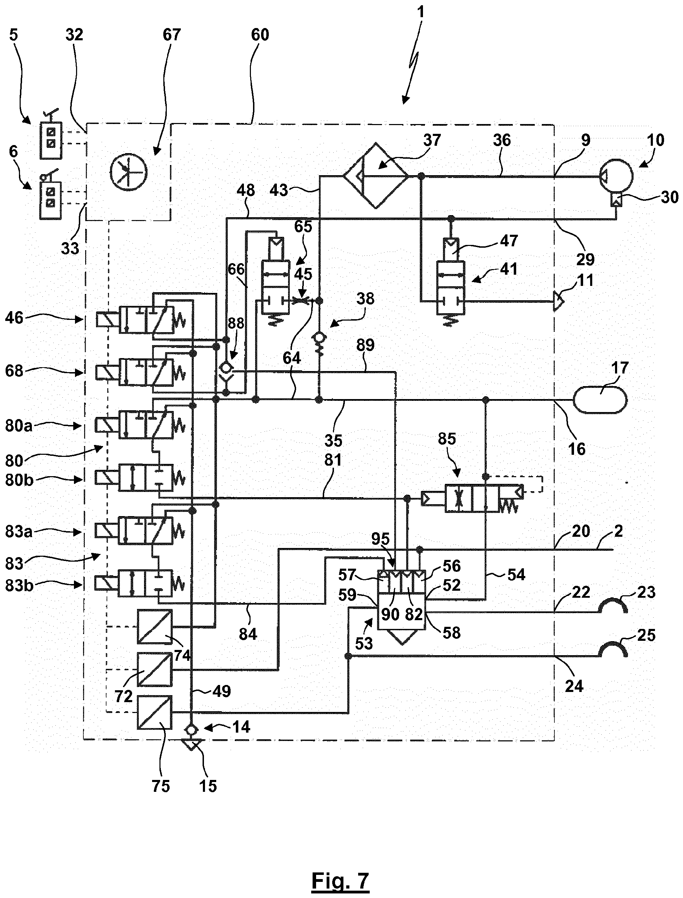

Für das Ausführungsbeispiel gemäß **Fig. 7** sind Zweigleitungen von den Steuerleitungen 48, 66 jeweils mit einem Eingang eines Wechselventils 88 verbunden, dessen Ausgang mit einer Steuerleitung 89 verbunden ist, die mit einem Steueranschluss 90 des Anhängersteuerventils 53 verbunden ist. Im ordnungsgemäßen Betrieb der Druckluftaufbereitungseinheit 1 mit elektrischer Ansteuerung der Steuerventile 46, 68 gibt es lediglich drei mögliche Betriebssituationen:
a) Steuerventil 46 ist bestromt, während Steuerventil 68 nicht bestromt ist. Da die Steuerleitung 48 druckbeaufschlagt ist, fördert der Kompressor 10 keine Druckluft. Das Druckregelventil 41 befindet sich in seiner Durchlassstellung. Infolge der nicht druckbeaufschlagten Steuerleitung 66 befindet sich das Bypassventil 65 in seiner Sperrstellung, sodass keine Regeneration stattfindet.
b) Steuerventil 46 ist nicht bestromt, während Steuerventil 68 bestromt ist. Infolge der drucklosen Steuerleitung 48 fördert der Kompressor 10 Druckluft, während sich das Druckregelventil 41 in seiner Sperrstellung befindet. Es liegt somit eine Lastphase vor. Infolge der druckbeaufschlagten Steuerleitung 66 befindet sich das Bypassventil 65 in seiner Durchlassstellung, dennoch erfolgt keine Regeneration, da der Kompressor Druckluft fördert.
c) Beide Steuerventile 46, 68 sind bestromt. Der Kompressor 10 fördert keine Druckluft. Das Druckregelventil 41 befindet sich in seiner Durchlassstellung. Über das Bypassventil 65 in seiner Durchlassstellung kann eine Regeneration des Lufttrockners 37 erfolgen.

Somit ist im Betrieb mit vorhandener elektrischer Leistungsversorgung immer mindestens ein Steuerventil 46, 68 bestromt, sodass auch immer mindestens eine Steuerleitung 66, 48 druckbeaufschlagt ist. Demzufolge ist auch die Steuerleitung 89 immer druckbeaufschlagt, sofern die elektrische Leistungsversorgung ordnungsgemäß funktioniert. Diese Druckbeaufschlagung des Steueranschlusses 89 kann genutzt werden, um über den Steueranschluss 90 eine Aussteuerung des Bremssteuerdrucks über den Hydraulikdruck an dem Anschluss 20 bzw. dem hydraulischen Steueranschluss 56 zu unterbinden. Funktioniert die elektrische Ansteuerung der Steuerventile 46, 68 nicht ordnungsgemäß und befinden sich diese beide Steuerventile 46, 68 in der Entlüftungsstellung, führt die Entlüftung des Steueranschlusses 90 dazu, dass die Redundanz-Aktivierungseinrichtung 95 dafür sorgt, dass eine elektropneumatische Steuerung über die Steuerventileinheit 83 und den pneumatischen Steueranschluss 57 nicht erfolgt, sondern vielmehr die Steuerung des Bremssteuerdrucks in der Rückfallebene über den hydraulischen Steueranschluss 56 erfolgen kann.

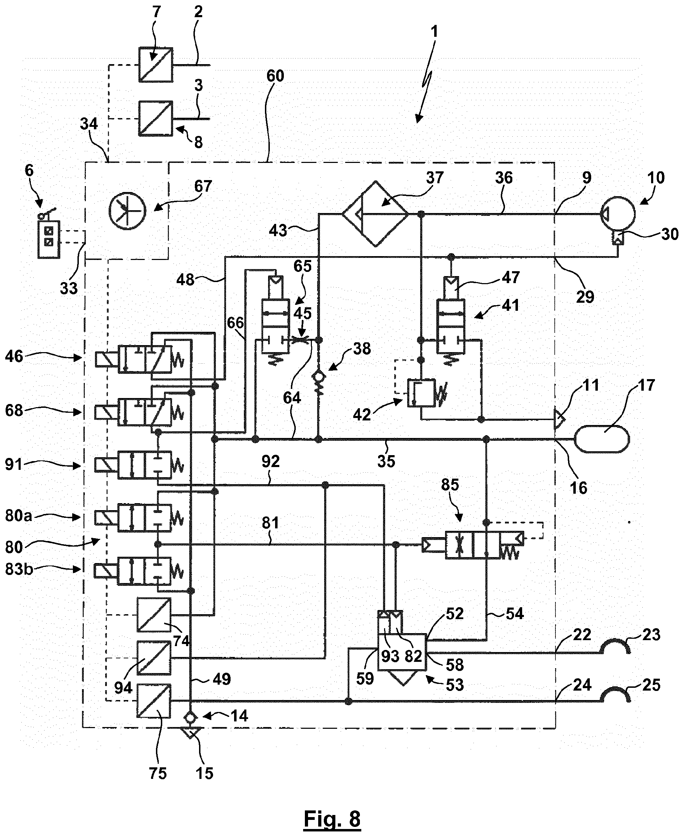

Gemäß **Fig. 8** wird der Steuereinheit 67 einerseits über den elektrischen Anschluss 33 ein Parkbremswunsch des Fahrers über den Parkbremssignalgeber 6 zugeführt. Zum anderen sind Zweigleitungen der hydraulischen Bremsleitungen 2, 3 mit Drucksensoren 7, 8 verbunden, deren elektrisches Drucksignal über den Anschluss 34 der Steuereinheit 67 zugeführt werden. Die Steuereinheit 67 ermittelt aus diesen Signalen eine geeignete Ansteuerung der Steuerventileinheit 80 zur Aussteuerung (oder Regelung) des Steuerdrucks in der Steuerleitung 81, welche über den Steueranschluss 82 auf das Anhängersteuerventil 53 einwirkt.

Für das dargestellte Ausführungsbeispiel ist das Steuerventil 68 multifunktional ausgebildet, indem dieses nicht lediglich der Ansteuerung des Bypassventils 65 dient. Vielmehr zweigt von der Steuerleitung 66 eine Zweigleitung ab, welche über ein weiteres Steuerventil 91 in Ausgestaltung als 2/2-Wege-Magnetventil und eine Steuerleitung 92 mit einem (u. U. invertierten) pneumatischen Steueranschluss 93 des Anhängersteuerventils 53 verbunden ist. Je nach Ansteuerung der Steuerventile 68, 91 kann über die Steuerleitung 92 der Steueranschluss 93 be- und entlüftet werden, womit eine Parkbremsfunktion an dem Anhänger in der zuvor erläuterten Weise herbeigeführt werden kann. Hier ist in der Druckluftaufbereitungseinheit 1 ein weiterer Drucksensor 94 eingesetzt, über welchen der Druck in der Steuerleitung 92 erfasst wird. Das Ausgangssignal des Drucksensors 94 wird zur Überwachung und/oder zu Steuerungs- oder Regelungszwecken der Steuereinheit 67 zugeführt.

### BEZUGSZEICHENLISTE

- 1: Druckluftaufbereitungseinheit
- 2: hydraulische Bremsleitung
- 3: hydraulische Bremsleitung
- 5: Betriebsbremssignalgeber
- 6: Parkbremssignalgeber
- 7: Drucksensor
- 8: Drucksensor
- 9: Versorgungsanschluss
- 10: Kompressor
- 11: Entlüftungsanschluss
- 12: Anschluss
- 13: Regenerationsbehälter
- 14: Rückschlagventil
- 15: Entlüftungsanschluss
- 16: Anschluss
- 17: Behälter
- 18: Anschluss
- 19: pneumatisches Parkventil
- 20: hydraulischer Anschluss
- 21: hydraulischer Anschluss
- 22: Anschluss
- 23: Kupplungskopf Vorrat
- 24: Anschluss
- 25: Kupplungskopf Bremse
- 26: Anschluss
- 27: Behälter
- 28: Verbraucherkreis
- 29: Steuerausgang
- 30: Steueranschluss
- 31: Anschluss
- 32: elektrischer Anschluss
- 33: elektrischer Anschluss
- 34: elektrischer Anschluss
- 35: Zentralleitung
- 36: Eingangsleitung
- 37: Lufttrockner
- 38: Rückschlagventil
- 39: Zweigleitung
- 40: Leitungspfad
- 41: Druckregelventil
- 42: Sicherheitsventil
- 43: Ausgangsleitung
- 44: Zweigleitung
- 45: Drossel
- 46: Steuerventil
- 47: Steueranschluss
- 48: Steuerleitung
- 49: Entlüftungsleitung
- 50: Zweigleitung
- 51: Steueranschluss
- 52: Versorgungsanschluss
- 53: Anhängersteuerventil
- 54: Zweigleitung
- 55: hydraulischer Steueranschluss
- 56: hydraulischer Steueranschluss
- 57: pneumatischer Steueranschluss
- 58: Ausgangsanschluss
- 59: Ausgangsanschluss
- 60: Gehäuse
- 61: Zweigleitung
- 62: Kreisschutzventil
- 63: Betätigungsorgan
- 64: Bypassleitung
- 65: Bypassventil
- 66: Steuerleitung
- 67: Steuereinheit
- 68: Steuerventil
- 69: Zweigleitung
- 70: Rückschlagventil
- 71: elektrischer Steueranschluss
- 72: Drucksensor
- 73: Drucksensor
- 74: Drucksensor
- 75: Drucksensor
- 76: Kreisschutzventil
- 77: Leitungszweig
- 78: Steuerventil
- 79: Steuerleitung
- 80: Steuerventileinheit
- 81: Steuerleitung
- 82: Steueranschluss
- 83: Steuerventileinheit
- 84: Steuerleitung
- 85: Notbremsventil
- 86: Steuerventil
- 87: Steuerleitung
- 88: Wechselventil
- 89: Steuerleitung
- 90: Steueranschluss
- 91: Steuerventil
- 92: Steuerleitung
- 93: Steueranschluss
- 94: Drucksensor
- 95: Redundanz-Aktivierungseinrichtung
- 96: Steueranschluss

## Patentansprüche

1. Druckluftaufbereitungseinheit (1) für eine Druckluftanlage eines Nutzfahrzeugs mit einer mit einem Kompressor verbindbaren Versorgungsleitung und ausgangsseitigen Anschlüssen für Verbraucherkreise und einem integrierten Lufttrockner zur Reinigung und Entfeuchtung der vom Kompressor bereitgestellten Druckluft, **dadurch gekennzeichnet, dass**
a) die Druckluftaufbereitungseinheit (1) ein Anhängersteuerventil (53) besitzt,
b) das Anhängersteuerventil und die Druckluftaufbereitungseinheit in ein gemeinsames Gehäuse integriert sind oder das Anhängersteuerventil ein Modul der Druckluftaufbereitungseinheit ist, welches an ein anderes Modul angeflanscht ist, und
c) in die Druckluftaufbereitungseinheit (1) eine Notbremseinrichtung für eine Anhängerbremsanlage integriert ist.

2. Druckluftaufbereitungseinheit (1) nach Anspruch 1, **dadurch gekennzeichnet, dass** das Anhängersteuerventil (53) einen pneumatischen Bremssteuerdruck für einen Anhänger in Abhängigkeit eines hydraulischen Bremsdrucks erzeugt.

3. Druckluftaufbereitungseinheit (1) nach Anspruch 1 oder 2, **dadurch gekennzeichnet, dass** dem Versorgungsanschluss (52) des Anhängersteuerventils (53) ein Notbremsventil (85) vorgeordnet ist, wobei die Notbremseinrichtung oder das Notbremsventil (85) in einer Notbremssituation eine Verringerung des Drucks an einem Anschluss (22) für einen Kupplungskopf Vorrat (23) herbeiführt.

4. Druckluftaufbereitungseinheit (1) nach einem der vorhergehende Ansprüche, **dadurch gekennzeichnet, dass** die Druckluftaufbereitungseinheit (1) einen elektrischen Anschluss (32; 33; 34) besitzt, über welchen der Druckluftaufbereitungseinheit (1) ein elektrisches Signal zuführbar ist, welches mit einem hydraulischen Bremsdruck korreliert.

5. Druckluftaufbereitungseinheit (1) nach einem der vorhergehenden Ansprüche, **dadurch gekennzeichnet, dass** die Druckluftaufbereitungseinheit (1) mindestens einen hydraulischen Anschluss (20; 21) für eine hydraulische Bremsleitung (2; 3) besitzt.

6. Druckluftaufbereitungseinheit (1) nach Anspruch 5, **dadurch gekennzeichnet, dass** der hydraulische Anschluss (20; 21) in der Druckluftaufbereitungseinrichtung (1) mit einem hydraulischen Steueranschluss (55; 56) des Anhängersteuerventils (53) verbunden ist.

7. Druckluftaufbereitungseinheit (1) nach einem der vorhergehenden Ansprüche, **dadurch gekennzeichnet, dass**
a) ein Drucksensor (75) vorhanden ist, der den von dem Anhängersteuerventil (53) ausgesteuerten pneumatischen Bremssteuerdruck für den Anhänger erfasst,
b) das Drucksignal des Drucksensors (75) einer Steuereinheit (67) zugeführt ist und
c) die Steuereinheit (67) über Steuerlogik verfügt, welche zusätzlich zu dem an dem hydraulischen Steueranschluss (55; 56) anliegenden Druck und/oder zusätzlich zu einem elektrischen Signal, welches mit einem hydraulischen Bremsdruck korreliert, den Bremssteuerdruck beeinflusst.

8. Druckluftaufbereitungseinheit (1) nach einem der vorhergehenden Ansprüche, **dadurch gekennzeichnet, dass** das Anhängersteuerventil (53) redundant
a) hydraulisch und
b) elektrisch, pneumatisch und/oder elektropneumatisch
ansteuerbar ist.

9. Druckluftaufbereitungseinheit (1) nach Anspruch 8, **dadurch gekennzeichnet, dass** eine Redundanz-Aktivierungseinrichtung (95) vorhanden ist, die
a) für erste Betriebsbedingungen die hydraulische Ansteuerung deaktiviert und
b) für zweite Betriebsbedingungen die hydraulische Ansteuerung aktiviert.

10. Druckluftaufbereitungseinheit (1) nach einem der vorhergehenden Ansprüche, **dadurch gekennzeichnet, dass** die Druckluftaufbereitungseinheit (1) einen pneumatischen Anschluss (18) für ein pneumatisches Parkventil (19) besitzt.

11. Druckluftaufbereitungseinheit (1) nach Anspruch 10, **dadurch gekennzeichnet, dass** der pneumatische Anschluss (18) für das Parkventil (19) in der Druckluftaufbereitungseinrichtung (1) mit einem pneumatischen Steueranschluss (57) des Anhängersteuerventils (53) verbunden ist.

12. Druckluftaufbereitungseinheit (1) nach einem der vorhergehenden Ansprüche, **dadurch gekennzeichnet, dass** das Anhängersteuerventil (53) zwei hydraulische Steueranschlüsse (55, 56) besitzt.

13. Druckluftaufbereitungseinheit (1) nach einem der vorhergehenden Ansprüche, **dadurch gekennzeichnet, dass** die Druckluftaufbereitungseinheit (1), insbesondere das Anhängersteuerventil (53), ein manuelles Betätigungsorgan (63) besitzt.

14. Druckluftaufbereitungseinheit (1) nach einem der vorhergehenden Ansprüche, **dadurch gekennzeichnet, dass** die Druckluftaufbereitungseinheit (1) mindestens einen weiteren Verbraucherkreis (28) mit Druckluft versorgt.

15. Druckluftaufbereitungseinheit (1) nach einem der vorhergehenden Ansprüche, **dadurch gekennzeichnet, dass** die Druckluftaufbereitungseinheit (1) einen elektrischen Anschluss (32) für elektrisches Fußbremssignal und/oder einen elektrischen Anschluss (33) für elektrisches Parkbremssignal besitzt.

16. Nutzfahrzeug mit einer hydraulischen Bremsanlage und einer Druckluftaufbereitungseinheit (1) nach einem der vorhergehenden Ansprüche.

## Claims

1. Compressed air processing unit (1) for a compressed air system of a commercial vehicle comprising a supply line which is connectable to a compressor and outlet ports for consumer circuits and an integrated air dryer for cleaning and dehumidifying the compressed air provided by the compressor, **characterised in that**
a) the compressed air processing unit (1) comprises a trailer control valve (53),
b) the trailer control valve and the compressed air processing unit being integrated into a common housing or the trailer control valve being a module of the compressed air processing unit which is flanged to another module and
c) an emergency braking device for a trailer braking system is integrated into the compressed air processing unit (1).

2. Compressed air processing unit (1) of claim 1, **characterised in that** the trailer control valve (53) generates a pneumatic brake control pressure for a trailer in dependency on a hydraulic brake pressure.

3. Compressed air processing unit (1) of claim 1 or 2, **characterised in that** an emergency brake device for a trailer brake system is integrated into the compressed air processing unit (1), wherein in particular an emergency brake valve (85) is arranged upstream from the supply port (52) of the trailer control valve (53), the emergency brake device or the emergency brake valve (85) causing a reduction of the pressure at a port (22) for a supply coupling head (23) in an emergency brake situation.

4. Compressed air processing unit (1) of one of the preceding claims, **characterised in that** the compressed air processing unit (1) comprises an electric port (32; 33; 34) by which it is possible to feed an electric signal to the compressed air processing unit (1) which correlates to a hydraulic brake pressure.

5. Compressed air processing unit (1) of one of the preceding claims, **characterised in that** the compressed air processing unit (1) comprises at least one hydraulic port (20; 21) for a hydraulic brake line (2;3).

6. Compressed air processing unit (1) of claim 5, **characterised in that** the hydraulic port (20; 21) is connected in the compressed air processing unit (1) to a hydraulic control port (55; 56) of the trailer control valve (53).

7. Compressed air processing unit (1) of one of the preceding claims, **characterised in that**
a) a pressure sensor (75) is provided which senses the pneumatic brake control pressure for the trailer controlled by the trailer control valve (53),
b) the pressure signal of the pressure sensor (75) is fed to a control unit (67) and
c) the control unit (67) comprises control logic which influences the brake control brake pressure additionally to the pressure biasing the hydraulic control port (55; 56) and/or additionally to an electric signal which correlates to a hydraulic brake control.

8. Compressed air processing unit (1) of one of the preceding claims, **characterised in that** the trailer control valve (53) is
a) hydraulically and
b) electrically, pneumatically and/or electro-pneumatically
controlled in a redundant way.

9. Compressed air processing unit (1) of claim 8, **characterised in that** a redundancy-activation device (95) is provided which
a) for first operating conditions deactivates the hydraulic control and
b) for second operating conditions activates the hydraulic control.

10. Compressed air processing unit (1) of one of the preceding claims, **characterised in that** the compressed air processing unit (1) comprises a pneumatic port (18) for a pneumatic parking valve (19).

11. Compressed air processing unit (1) of claim 10, **characterised in that** the pneumatic port (18) for the parking valve (19) is connected in the compressed air processing unit (1) to a pneumatic control port (57) of the trailer control valve (53).

12. Compressed air processing unit (1) of one of the preceding claims, **characterised in that** the trailer control valve (53) comprises two hydraulic control ports (55, 56).

13. Compressed air processing unit (1) of one of the preceding claims, **characterised in that** the compressed air processing unit (1), in particular the trailer control valve (53), comprises a manual actuation means (63).

14. Compressed air processing unit (1) of one of the preceding claims, **characterised in that** the compressed air processing unit (1) supplies at least one other consumer circuit (28) with compressed air.

15. Compressed air processing unit (1) of one of the preceding claims, **characterised in that** the compressed air processing unit (1) comprises an electric port (32) for an electric foot brake signal and/or an electric port (33) for an electric parking brake signal.

16. Commercial vehicle with a hydraulic brake system and a compressed air processing unit (1) of one of the preceding claims.

## Revendications

1. Unité de traitement d'air comprimé (1) pour une installation d'air comprimé d'un véhicule utilitaire avec une conduite d'alimentation pouvant être reliée avec un compresseur et des raccords côté sortie pour des circuits consommateurs et un dispositif de séchage d'air intégré pour le nettoyage et la déshumidification de l'air comprimé généré par le compresseur, **caractérisée en ce que**
a) l'unité de traitement d'air comprimé (1) comprend une soupape de commande de remorque (53),
b) la soupape de commande de remorque et l'unité de traitement d'air comprimé sont intégrées dans un boîtier commun ou la soupape de commande de remorque est un module de l'unité de traitement d'air comprimé, qui est bridé à un autre module, et
c) un dispositif de freinage d'urgence pour une installation de freinage de remorque est intégrée dans l'unité de traitement d'air comprimé (1).

2. Unité de traitement d'air comprimé (1) selon la revendication 1, **caractérisée en ce que** la soupape de commande de remorque (53) génère une pression de commande de freinage pneumatique pour une remorque en fonction d'une pression de freinage hydraulique.

3. Unité de traitement d'air comprimé (1) selon la revendication 1 ou 2, **caractérisée en ce qu'**une soupape de freinage d'urgence (85) est disposée en amont du raccord d'alimentation (52) de la soupape de commande de remorque (53), le dispositif de freinage d'urgence ou la soupape de freinage d'urgence (85) provoquant, dans une situation de freinage d'urgence, une réduction de la pression au niveau d'un raccord (22) pour un réservoir de tête d'accouplement (23).

4. Unité de traitement d'air comprimé (1) selon l'une des revendications précédentes, **caractérisée en ce que** l'unité de traitement d'air comprimé (1) comprend un raccord électrique (32 ; 33 ; 34) par l'intermédiaire duquel un signal électrique , qui est corrélé avec une pression de freinage hydraulique, peut être introduit dans l'unité de traitement d'air comprimé (1).

5. Unité de traitement d'air comprimé (1) selon l'une des revendications précédentes, **caractérisée en ce que** l'unité de traitement d'air comprimé (1) comprend au moins un raccord hydraulique (20 ; 21) pour une conduite de freinage hydraulique (2 ; 3).

6. Unité de traitement d'air comprimé (1) selon la revendication 5, **caractérisée en ce que** le raccord hydraulique (20 ; 21) est relié, dans le dispositif de traitement d'air comprimé (1), avec un raccord de commande hydraulique (55 ; 56) de la soupape de commande de remorque (53).

7. Unité de traitement d'air comprimé (1) selon l'une des revendications précédentes, **caractérisée en ce que**
a) un capteur de pression (75) est présent, qui mesure la pression de commande de freinage pneumatique pour la remorque, commandée par la soupape de remorque (53),
b) le signal de pression du capteur de pression (75) est introduit dans une unité de commande (67) et
c) l'unité de commande (67) dispose d'une logique de commande, qui influence, en plus de la pression régnant au niveau du raccord de commande hydraulique (55 ; 56) et/ou en plus d'un signal électrique, qui est corrélé avec une pression de freinage hydraulique, la pression de commande de freinage.

8. Unité de traitement d'air comprimé (1) selon l'une des revendications précédentes, **caractérisée en ce que** la soupape de commande de remorque (53) peut être commandée, de manière redondante,
a) de manière hydraulique et
b) de manière électrique, pneumatique et/ou électropneumatique.

9. Unité de traitement d'air comprimé (1) selon la revendication 8, **caractérisée en ce qu'**un dispositif d'activation de redondance (95) est présent, qui
a) désactive la commande hydraulique dans des premières conditions de fonctionnement et
b) active la commande hydraulique dans des deuxièmes conditions de fonctionnement.

10. Unité de traitement d'air comprimé (1) selon l'une des revendications précédentes, **caractérisée en ce que** l'unité de traitement d'air comprimé (1) comprend un raccord pneumatique (18) pour une soupape de stationnement pneumatique (19).

11. Unité de traitement d'air comprimé (1) selon la revendication 10, **caractérisée en ce que** le raccord pneumatique (18) pour la soupape de stationnement (19) est relié, dans le dispositif de traitement d'air comprimé (1), avec un raccord de commande pneumatique (57) de la soupape de commande de remorque (53).

12. Unité de traitement d'air comprimé (1) selon l'une des revendications précédentes, **caractérisée en ce que** la soupape de commande de remorque (53) comprend deux raccords de commande hydrauliques (55, 56).

13. Unité de traitement d'air comprimé (1) selon l'une des revendications précédentes, **caractérisée en ce que** l'unité de traitement d'air comprimé (1), plus particulièrement la soupape de commande de remorque (53), comprend un organe d'actionnement manuel (63).

14. Unité de traitement d'air comprimé (1) selon l'une des revendications précédentes, **caractérisée en ce que** l'unité de traitement d'air comprimé (1) alimente au moins un circuit consommateur (28) supplémentaire en air comprimé.

15. Unité de traitement d'air comprimé (1) selon l'une des revendications précédentes, **caractérisée en ce que** l'unité de traitement d'air comprimé (1) comprend un raccord électrique (32) pour un signal de freinage électrique à pédale et/ou un raccord électrique (33) pour un signal de freinage électrique de stationnement.

16. Véhicule utilitaire avec une installation de freinage hydraulique et une unité de traitement d'air comprimé (1) selon l'une des revendications précédentes.
